# EUROPÄISCHE PATENTSCHRIFT

(11) **EP 2 349 798 B1**
(45) Veröffentlichungstag und Bekanntmachung des Hinweises auf die Patenterteilung: **08.08.2012**
(21) Anmeldenummer: 09778699.0
(22) Anmeldetag: 24.09.2009
(51) Int. Cl.: B60T 10/02

(54) **HYDRODYNAMISCHE MASCHINE UND VERFAHREN ZUM BETREIBEN DERSELBEN**
HYDRODYNAMIC MACHINE AND METHOD FOR OPERATING THE SAME
MACHINE HYDRODYNAMIQUE ET PROCÉDÉ POUR LA FAIRE FONCTIONNER

(30) Priorität: 26.09.2008 DE 102008049283
(43) Veröffentlichungstag der Anmeldung: 03.08.2011
(73) Patentinhaber: Voith Patent GmbH, 89522 Heidenheim (DE)
(72) Erfinder: LAUKEMANN, Dieter, 74541 Vellberg (DE); NEHER, Achim, 74564 Crailsheim (DE)
(74) Vertreter: Dr. Weitzel & Partner
(86) Internationale Anmeldenummer: PCT/EP2009/006902
(87) Internationale Veröffentlichungsnummer: WO 2010/034493

(56) Entgegenhaltungen:
- WO-A-2005/025957
- DE-A1-102006 021 331
- DE-C- 677 160

## Beschreibung

Die vorliegende Erfindung betrifft eine hydrodynamische Maschine, insbesondere einen hydrodynamischen Retarder, sowie ein Verfahren zum Betreiben derselben.

Um die Verlustleistung von hydrodynamischer Maschinen, insbesondere von hydrodynamischen Retardern, im ausgeschalteten Zustand - Nichtbetriebszustand - zu minimieren, sind Lösungen für Kraftfahrzeuge, wie sie die vorliegende Erfindung gemäß einer vorteilhaften Ausführungsform betrifft, vorgeschlagen worden, bei welchen der Arbeitsraum, der zwischen zwei Schaufelrädern ausgebildet wird, mittels einer Pumpe entleert beziehungsweise entleert gehalten wird. Vorteilhaft ist eine solche Pumpe eine Seitenkanalpumpe, wie sie in der Offenlegungsschrift DE 10 2006 021 331 A1 oder in der Offenlegunsschrift WO 2005/025 957 A1 beschrieben wird. Eine Seitenkanalpumpe zeichnet sich dadurch aus, dass ein Laufrad mit einer Vielzahl von Schaufeln vorgesehen ist, welche einem Seitenkanal, der sich in Umfangsrichtung der hydrodynamischen Maschine erstreckt und wenigstens eine Unterbrechung aufweist, derart gegenüberstehen, dass in dem Seitenkanal eine Förderwirkung in Umfangsrichtung der hydrodynamischen Maschine für darin befindliches Arbeitsmedium bewirkt wird. In Drehrichtung des Laufrads gesehen vor der Unterbrechung mündet die Druckleitung der Seitenkanalpumpe und hinter der Unterbrechung die Saugleitung der Seitenkanalpumpe, wobei letztere in strömungsleitender Verbindung mit dem Arbeitsraum steht, so dass das Arbeitsmedium und/oder Luft aus dem Arbeitsraum über die Saugleitung in den Seitenkanal gezogen wird, entlang des Seitenkanals gefördert wird und über die Druckleitung aus dem Seitenkanal wieder herausgepumpt wird.

Ein Nachteil der bekannten Lösung ist, dass die Pumpe auch dann, wenn die notwendige Menge von Arbeitsmedium aus dem Arbeitsraum abgepumpt wurde, noch teilweise mit Arbeitsmedium gefüllt ist und somit einen Druck auf ihrer Druckseite beziehungsweise in ihrer Druckleitung aufbaut. Dies hat eine erhöhte Leistungsaufnahme der Pumpe zur Folge, was entgegen dem Ziel der Minimierung der Verlustleistung im Nichtbetriebszustand der hydrodynamischen Maschine steht.

Das Dokument WO 2005/025957 A beschreibt einen Kraftfahrzeugantrieb mit einem Wasserretarder und kann als nächstliegender Stand der Technik betrachtet werden.

Der vorliegenden Erfindung liegt die Aufgabe zugrunde, eine hydrodynamische Maschine mit einer Absaugpumpe, insbesondere in Form einer Seitenkanalpumpe, anzugeben, bei welcher die Verlustleistung im Nichtbetriebszustand beziehungsweise ausgeschalteten Zustand der hydrodynamischen Maschine noch besser minimiert wird. Vorteilhaft soll ferner ein Verfahren für eine solche hydrodynamische Maschine angegeben werden, welches eine schonende und langlebige Benutzung der hydrodynamischen Maschine ermöglicht.

Die erfindungsgemäße Aufgabe wird durch die in den unabhängigen Ansprüchen beschriebenen Ausführungsformen gelöst. In den abhängigen Ansprüchen sind vorteilhafte und besonders zweckmäßige Ausgestaltungen der Erfindung angegeben.

Die erfindungsgemäße hydrodynamische Maschine, die beispielsweise als hydrodynamischer Retarder ausgeführt ist und insbesondere in einem Kraftfahrzeug vorgesehen sein kann, weist wenigstens zwei Schaufelräder auf, die miteinander einen torusförmigen Arbeitsraum ausbilden und von denen wenigstens eines über einer Drehachse der hydrodynamischen Maschine umläuft. Insbesondere, wenn die hydrodynamische Maschine als hydrodynamischer Retarder ausgeführt ist, kann diese in einem Fahrzeugkühlkreislauf eingebunden sein, so dass das Arbeitsmedium der hydrodynamischen Maschine zugleich das Kühlmedium des Fahrzeugs, insbesondere Wasser oder ein Wassergemisch ist.

Der Arbeitsraum ist für einen Betriebszustand über wenigstens einen Arbeitsmediumeinlass mit Arbeitsmedium befüllbar und für einen Nichtbetriebszustand von dem Arbeitsmedium entleerbar. Im Betriebszustand bildet sich durch Antrieb des ersten Schaufelrades eine Kreislaufströmung des Arbeitsmediums im Arbeitsraum aus, welche Drehmoment und/oder Antriebsleistung hydrodynamisch vom ersten auf das zweite Schaufelrad überträgt. Durch Entleeren des Arbeitsraums beim Übergang in den Nichtbetriebszustand wird die Drehmomentübertragung beziehungsweise Antriebsleistungsübertragung unterbrochen.

Um diese Entleerung zu bewirken und aufrechtzuerhalten, ist eine Absaugpumpe mittels einer strömungsleitenden Saugleitung am Arbeitsraum angeschlossen, welche Arbeitsmedium und/oder Luft aus dem Arbeitsraum absaugt und zum Abführen aus der hydrodynamischen Maschine in eine Druckleitung fördert. Insbesondere wird durch das Absaugen ein Unterdruck im Arbeitsraum ausgebildet.

Die Absaugpumpe weist wenigstens ein Laufrad auf, das zusammen mit wenigstens einem Schaufelrad der hydrodynamischen Maschine umläuft. Gemäß einer ersten Ausführungsform laufen Schaufelrad und Laufrad mit derselben Drehzahl um. Es ist jedoch auch möglich, eine Übersetzung in der Triebverbindung zwischen Laufrad und Schaufelrad vorzusehen, so dass die Drehzahlen von Laufrad und Schaufelrad abweichen. Gemäß einer besonders vorteilhaften Ausführungsform ist das Laufrad der Absaugpumpe jedoch drehstarr an dem umlaufenden Schaufelrad angeschlossen, beispielsweise indem das Laufrad und das Schaufelrad von einer gemeinsamen Welle getragen werden, oder wird durch das Schaufelrad selbst ausgebildet. Im letzteren Fall weist somit das Schaufelrad eine erste Beschaufelung auf, welche den Arbeitsraum zusammen mit der Beschaufelung des zweiten Schaufelrads ausbildet, sowie eine zweite Beschaufelung, welche die Schaufeln der Absaugpumpe ausbildet.

Erfindungsgemäß ist die Druckleitung über einen wahlweise verschließbaren Kanal, hier auch als Kurzschlusskanal bezeichnet, mit dem Arbeitsmediumeinlass der hydrodynamischen Maschine, dem Arbeitsraum der hydrodynamischen Maschine und/oder der Saugleitung der Absaugpumpe strömungsleitend verbunden. Wahlweise verschließbar bedeutet dabei, dass der Kanal in einem ersten Betriebszustand Arbeitsmedium und/oder Luft leitet und in einem zweiten Betriebszustand gegenüber einem Durchtritt von Arbeitsmedium und/oder Luft verschlossen ist. Im ersten Betriebszustand wird somit die Druckseite der Absaugpumpe drucklos geschaltet beziehungsweise wird der Druck der Druckseite auf das Druckniveau des Arbeitsmediumeinlasses, des Arbeitsraumes, insbesondere einer Stelle mit vergleichsweise niedrigem Druck oder Unterdruck im Arbeitsraum, oder der Saugseite der Absaugpumpe abgesenkt. Im zweiten Betriebszustand hingegen herrscht auf der Druckseite der gewünschte Überdruck zum Wegfördern des abgesaugten Arbeitsmediums.

Besonders vorteilhaft ist in dem Kanal ein zwischen wenigstens zwei Stellungen betätigbares Ventil, insbesondere ein 2/2-Wegeventil, angeordnet. In der ersten Stellung gibt das Ventil den Strömungsquerschnitt des Kanals frei, und in der zweiten Stellung verschließt das Ventil den Strömungsquerschnitt des Kanals. Das Ventil ist vorteilhaft derart vorgespannt, dass es, immer dann, wenn es aktiv betätigt wird, in die zweite Stellung verbracht wird, und, wenn es nicht betätigt wird, in der ersten Stellung verbleibt und somit den Kanal freigibt. Das Ventil ist somit als sogenanntes Normally-Open-Ventil ausgeführt.

Die Betätigung des Ventils kann beispielsweise mittels Druckluft erfolgen, in der Regel in der genannten Betätigungsart, das heißt bei Aufbringen eines Luftdruckes wird das Ventil in seine geschlossene Position verbracht, und frei von einem betätigenden Luftdruck öffnet es.

Die Pumpe ist, wie dargelegt, vorteilhaft als sogenannte Seitenkanalpumpe ausgeführt, wobei hinsichtlich vorteilhafter konstruktiver Details auf die Offenlegungsschrift DE 10 2006 021 331 A1 verwiesen wird. Zumindest weist die Seitenkanalpumpe ein Laufrad mit einer Vielzahl von Schaufeln auf, die einem Seitenkanal, insbesondere in Axialrichtung der hydrodynamischen Maschine und/oder in Radialrichtung der hydrodynamischen Maschine, derart gegenüberstehen, dass in dem in Umfangsrichtung der hydrodynamischen Maschine verlaufenden Seitenkanal eine Pumpströmung erzeugt wird, und zwar von einer Einlassöffnung beziehungsweise von der Mündung der Saugleitung, die in Drehrichtung des Laufrads der Seitenkanalpumpe gesehen hinter einer Unterbrechung des Seitenkanals angeordnet ist, zu einer Auslassöffnung beziehungsweise der Mündung der Druckleitung, die in Drehrichtung des Laufrads gesehen vor der Unterbrechung angeordnet ist. Insbesondere ist der Seitenkanal mit einer einzigen Unterbrechung in Umfangsrichtung ausgeführt und erstreckt sich vorteilhaft mit seinem durchgängigen Abschnitt über einen Winkel von 300 oder 340° oder mehr.

Gemäß einer vorteilhaften Ausführungsform ist in der Druckleitung, über welche die Absaugpumpe das aus dem Arbeitsraum abgesaugte Arbeitsraum beziehungsweise die aus dem Arbeitsraum abgesaugte Luft abführt, ein Rückschlagventil vorgesehen. Das Rückschlagventil kann baulich mit dem Ventil, das den Kanal (Kurzschlusskanal) wahlweise verschließt, vereint sein, insbesondere in einem gemeinsamen Ventilgehäuse. Beide Ventile können vorteilhaft durch die hydrodynamische Maschine getragen werden, insbesondere in einem Gehäuse der hydrodynamischen Maschine eingesetzt sein.

Wenn das Ventil mittels Druckluft betätigt wird, so wird diese Druckluft vorteilhaft durch ein Druckluftsystem, insbesondere ein Fahrzeugdruckluftsystem, zur Verfügung gestellt. Dasselbe Druckluftsystem kann dafür dienen, die hydrodynamische Maschine ein- und auszuschalten, das heißt, ein Einlassventil und/oder ein Auslassventil, über welches Arbeitsmedium in die hydrodynamische Maschine beziehungsweise aus der hydrodynamischen Maschine geleitet wird, zu schalten. Insbesondere ist im Arbeitsmediumeinlass ein Einlassventil zum wahlweisen Verschließen des Arbeitsmediumeinlasses vorgesehen, welches ebenfalls mittels Druckluft aus dem Druckluftsystem, aus welchem auch das Ventil in dem Kurzschlusskanal beaufschlagt wird, geschaltet wird. Besonders vorteilhaft wird bei Druckbeaufschlagung des Einlassventils dieses aus seiner geschlossenen in seine geöffnete Stellung verbracht, somit die hydrodynamische Maschine eingeschaltet.

Das Einlassventil und das Ventil in dem Kurzschlusskanal oder die Abzweigstellen der diese Ventile beaufschlagenden Druckluftzweigleitungen können in Reihe zueinander in einer Druckluftleitung angeordnet sein, wobei insbesondere zwischen den beiden Ventilen oder den Abzweigstellen ein Absperrventil, insbesondere in Form eines 2/2-Wegeventils angeordnet ist, damit das Ventil in dem Kurzschlusskanal auch ohne einer Betätigung des Einlassventils druckbeaufschlagt werden kann.

Wenn die hydrodynamische Maschine einen externen Arbeitsmediumkreislauf aufweist, welcher beispielsweise der Fahrzeugkühlkreislauf sein kann, so dass das Arbeitsmedium insbesondere Wasser oder ein Wassergemisch ist, kann die Druckleitung im externen Arbeitsmediumkreislauf münden, um das abgesaugte Arbeitsmedium in diesen einzuspeisen. Die Mündung ist vorteilhaft parallel zu dem Arbeitsmediumauslass ausgeführt, wobei letzterer beispielsweise einen Ringkanal aufweist, der über eine Vielzahl von Bohrungen in strömungsleitender Verbindung mit dem Arbeitsraum steht, das durch die Bohrungen austretende Arbeitsmedium sammelt und gemeinsam in den externen Arbeitsmediumkreislauf abführt.

Ein erfindungsgemäßes Verfahren zum Betreiben einer erfindungsgemäßen hydrodynamischen Maschine sieht vor, den verschließbaren Kanal, insbesondere über das genannte Ventil, das in diesem angeordnet ist, im entleerten Zustand des Arbeitsraumes in Intervallen zu verschließen und zu öffnen, um wechselseitig einen Arbeitsmediumdruck auf der Druckseite der Absaugpumpe beziehungsweise in der Druckleitung auf- und abzubauen. Vorteilhaft wird das Ventil jeweils kurzzeitig verschlossen und verbleibt eine folgende längere Zeitspanne in der geöffneten Stellung. Die Intervalle können regelmäßig oder unregelmäßig gewählt werden oder in Abhängigkeit vorgegebener Randbedingungen, die beispielsweise durch Sensoren erfasst werden, betätigt werden.

Durch das erfindungsgemäße Verfahren kann, wenn das Lager des Laufrads der Absaugpumpe mit Arbeitsmedium geschmiert wird, wobei das Lager insbesondere als Gleitlager ausgeführt ist, sichergestellt werden, dass auch im Nichtbetriebszustand der hydrodynamischen Maschine eine ausreichende Schmierung des Lagers gewährleistet ist. Hierzu ist vorteilhaft ein Schmierkanal zwischen der Druckseite der Absaugpumpe, insbesondere zwischen deren Druckleitung und dem Lager vorgesehen. Durch wiederholt Aufbauen des Druckes auf der Druckseite beziehungsweise in der Druckleitung der Absaugpumpe wird Arbeitsmedium durch den Schmierkanal in das Lager gedrückt. Ein solches Schmieren kann beispielsweise alle 30 Minuten oder auch in anderen vorgegebenen Abständen erfolgen.

Die Erfindung soll nachfolgend anhand eines Ausführungsbeispiels exemplarisch beschrieben werden.

Es zeigen:
- Figuren 1 bis 3: mögliche Ausführungsformen für eine hydrodynamische Maschine mit einer Seitenkanalpumpe;
- Figur 4: schematisch eine mögliche Anordnung des wahlweise verschließbaren Kanals mit einem Ventil;
- Figur 5: eine weitere mögliche Anordnung des wahlweise verschließbaren Kanals mit einem Ventil, das über ein Fahrzeugdruckluftsystem angesteuert wird.

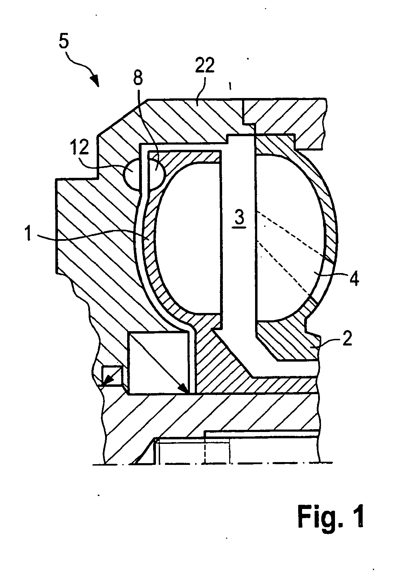

Die Figur 1 zeigt schematisch einen Axialschnitt durch eine hydrodynamische Maschine, hier einen hydrodynamischen Retarder, umfassend ein erstes Schaufelrad 1 und ein zweites Schaufelrad 2, die miteinander einen torusförmigen Arbeitsraum 3 ausbilden. Das Arbeitsmedium wird über einen Arbeitsmediumeinlass 4 in den Arbeitsraum 3 eingebracht. Das erste Schaufelrad 1, vorliegend das angetriebene Schaufelrad, bildet zusammen mit dem Bereich des ihm zugewandten Gehäuse 22 der hydrodynamischen Maschine eine Absaugpumpe 5 in Form einer Seitenkanalpumpe aus, umfassend ein Laufrad 8 und einen der Beschaufelung des Laufrads 8 in Axialrichtung gegenüberstehenden Seitenkanal 12. Das Laufrad 8 wird somit durch das erste Schaufelrad 1 ausgebildet und der Seitenkanal 12 durch das Gehäuse 22.

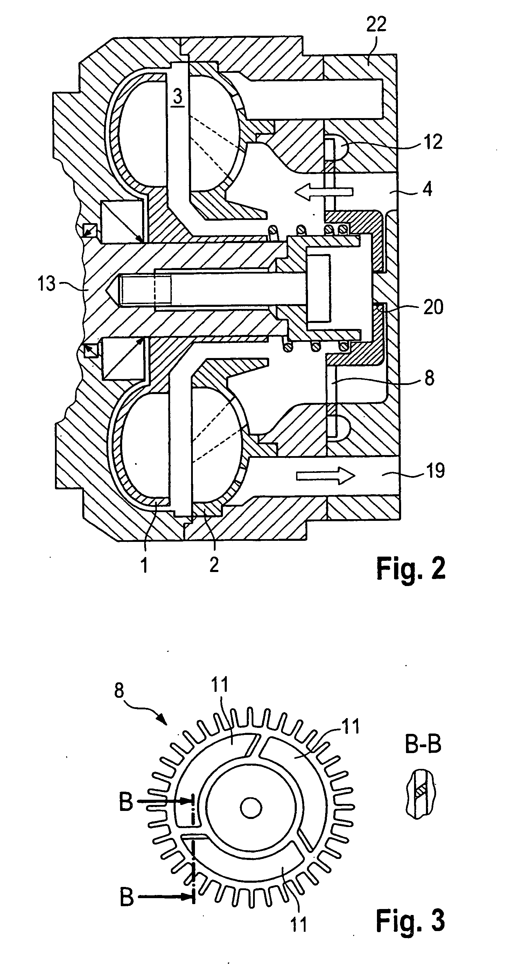

Gemäß der Ausführungsform, welche schematisch in dem Axialschnitt durch die hydrodynamische Maschine in der Figur 2 gezeigt ist, ist die Seitenkanalpumpe 5 getrennt von den Schaufelrädern 1, 2 jedoch drehfest verbunden über eine gemeinsame Welle 13 mit dem ersten Schaufelrad 1 ausgeführt. Vorliegend wird der Seitenkanal 12 wiederum durch das Gehäuse 22 der hydrodynamischen Maschine beziehungsweise einem Deckelkörper des Gehäuses 22 gebildet, wohingegen das Laufrad 8 eine Scheibenform aufweist, die in der Figur 3 nochmals beispielhaft gezeigt ist. Das Laufrad 8 der Seitenkanalpumpe wird vom Arbeitsmedium, das über den Arbeitsmediumeinlass 4 in den Arbeitsraum zwischen den beiden Schaufelrädern 1, 2 gelangt, durchströmt und weist daher entsprechende Öffnungen 11 auf, welche die Strömung möglichst unbeeinflusst lassen sollen. Die einzelnen Schaufeln des Laufrads 8 sind radial außerhalb des Arbeitsmediumeinlasses 4 dem Seitenkanal 12 gegenüberstehend angeordnet und pumpen Arbeitsmedium aus dem Arbeitsraum 3 über eine hier nicht gezeigt Saugleitung in eine hier nicht gezeigte Druckleitung. Der Seitenkanal verläuft dabei über den gesamten Umfang der hydrodynamischen Maschine, weist jedoch eine hier nicht näher dargestellte Unterbrechung auf, vor welcher - in Drehrichtung des Laufrads 8 gesehen - die Druckleitung mündet, und hinter welcher die Saugleitung mündet. Diese strömungsleitende Verbindung aus dem Arbeitsraum 3 über die Saugleitung durch die Seitenkanalpumpe in die Druckleitung und von dort in den hier nicht dargestellten externen Arbeitsmediumkreislauf ist parallel zu dem Arbeitsmediumauslass 19, über welchen Arbeitsmedium, in der Regel über einen vergleichsweise wesentlich größeren Querschnitt, aus dem Arbeitsraum 3 in den externen Kreislauf geleitet wird, vorgesehen. Der Arbeitsmediumauslass 19 kann beispielsweise, wie angedeutet, einen Ringraum umfassen, der über Bohrungen mit Arbeitsmedium aus dem Arbeitsraum 3 befüllt wird, das Arbeitsmedium sammelt und über eine oder mehrere Leitungen an den externen Arbeitsmediumkreislauf abführt.

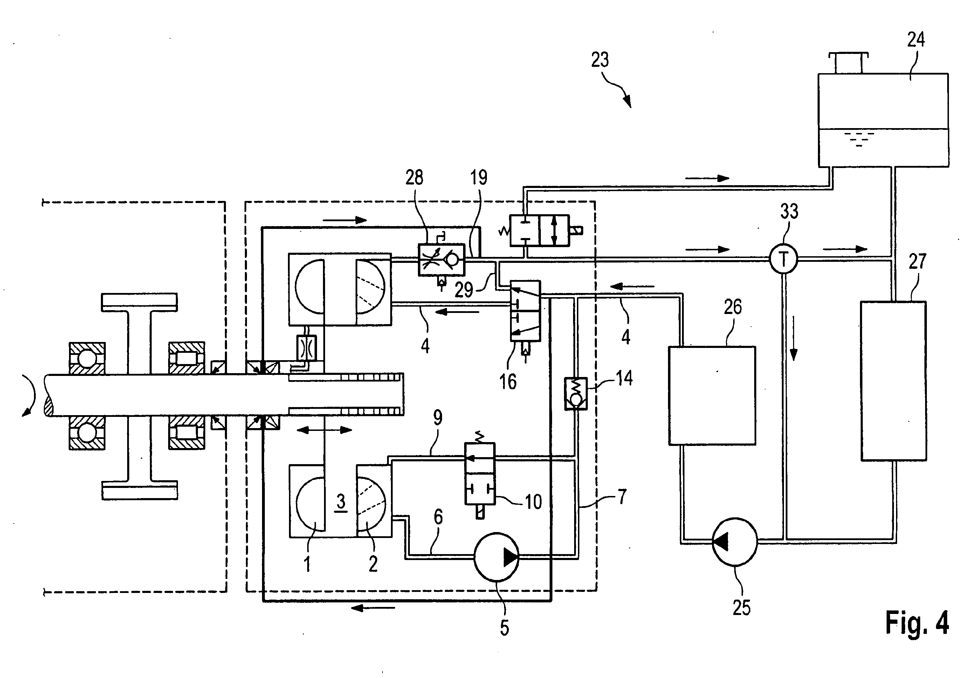

In der Figur 4 ist die hydrodynamische Maschine in einen externen Arbeitsmediumkreislauf 23 eingebunden gezeigt. Der externe Arbeitsmediumkreislauf 23, hier als Motorkühlkreislauf ausgeführt, weist einen Druckausgleichsbehälter 24 sowie eine Wasserpumpe 25 (oder allgemein Kühlmediumpumpe) auf. Mittels des externen Arbeitsmeidumkreislaufes 23 wird ein Motor 26, insbesondere Verbrennungsmotor, der das Kraftfahrzeug antreibt, gekühlt. Alternativ könnte die hydrodynamische Maschine auch in einem externen Arbeitsmediumkreislauf einer stationären Anlage vorgesehen sein. Zum Abführen der Wärme ist entsprechend ein Kühler 27 vorgesehen, wobei der Anteil des Kühlmediums, insbesondere Wasser oder ein Wassergemisch, das mittels der Wasserpumpe 25 durch den Kühler 27 gepumpt wird, über die Stellung des Thermostatventils 28 bestimmt wird.

In Reihe zu dem Motor 26 ist eine hydrodynamische Maschine, hier in Form eines Retarders, im externen Arbeitsmediumkreislauf 23 eingebunden, welche mit dem Kühlmedium als Arbeitsmedium betrieben und gekühlt wird. Entsprechend wird das Kühlmedium beziehungsweise Arbeitsmedium über den Arbeitsmediumeinlass 4 in den Retarder geleitet und über den Arbeitsmediumauslass 19 wieder aus dem Retarder abgeführt.

Die Bremsleistung des Retarders wird über ein Druckregelventil 28 im Arbeitsmediumauslass 19 eingestellt, welches mit einem Einlassventil 16 zusammenarbeitet, wobei letzteres den Strömungsweg für Arbeitsmedium im beziehungsweise zu dem Arbeitsmediumeinlass 4 wahlweise versperrt oder freigibt. Das Einlassventil 16 und das Druckregelventil 28 können zu einem gemeinsamen Ventil zusammengefasst werden und werden, wie später noch erläutert, vorteilhaft über ein Druckluftsystem, insbesondere Fahrzeugdruckluftsystem angesteuert.

Parallel zum Arbeitsmediumauslass 19 ist wiederum eine Saugleitung 6 einer Absaugpumpe 5 am Arbeitsraum 3 angeschlossen. Die Absaugpumpe 5 pumpt Arbeitsmedium und/oder Luft aus dem Arbeitsraum 3 beziehungsweise der Saugleitung 6 in eine Druckleitung 7, die vorliegend im Arbeitsmediumeinlass 4 mündet.

Wie man in der Figur 4 erkennen kann, ist die Mündung der Druckleitung 7 derart im Arbeitsmediumeinlass 4 gewählt, dass sie in Strömungsrichtung des Arbeitsmediums gesehen vor dem Einlassventil 16 positioniert ist, welches den Arbeitsmediumstrom wahlweise in den Arbeitsraum 3 oder über einen Bypass 29 an diesem vorbei gleich in den Arbeitsmediumauslass 19 hinter dem Druckregelventil 28 leitet.

Zwischen der Druckleitung 7 und dem Arbeitsraum 3 ist, vorliegend über einen gesonderten parallel zum Arbeitsmediumeinlass 4 vorgesehenen Einlass in den Arbeitsraum 3, ein Kanal 9 vorgesehen, der einen Kurzschluss über der Absaugpumpe 5 herstellen kann. Im Kanal 9 ist ein Ventil 10, vorliegend ein 2/2-Wegeventil angeordnet, das den Strömungsquerschnitt des Kanals 9 wahlweise öffnet oder verschließt.

Ferner ist in der Druckleitung 7 ein Rückschlagventil 14 vorgesehen, über welches das Arbeitsmedium aus der Druckleitung 7 in den externen Arbeitsmediumkreislauf 23, hier in Strömungsrichtung vor dem Einlassventil 16 gefördert wird. Das Rückschlagventil 14 verhindert ein ungewolltes Strömen von Arbeitsmedium aus dem Arbeitsmediumeinlass 4 über den Kanal 9 in den Arbeitsraum 3.

Das Ventil 14 und das Ventil 10 können auch zu einem gemeinsamen Ventil zusammengefasst werden, beziehungsweise das Rückschlagventil 14 könnte in das Ventil 10 integriert werden.

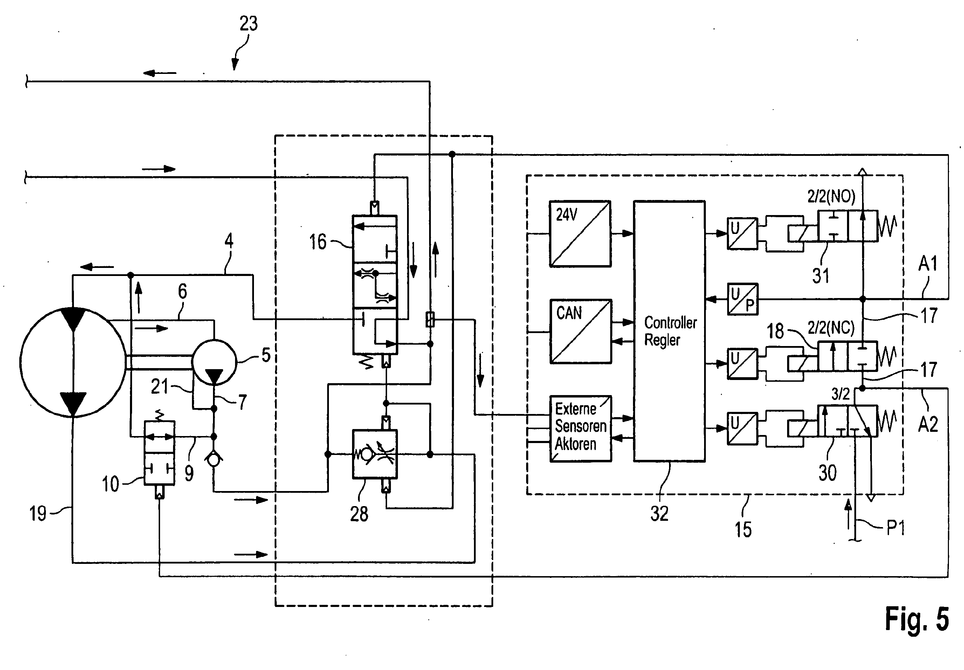

In der Figur 5 erkennt man eine mögliche Ansteuerung des Ventils 10 in dem die Druckleitung 7 mit dem Arbeitsmediumeinlass 4 verbindenden Kanal 9. Hierzu ist ein Fahrzeugdruckluftsystem 15 vorgesehen, welches Druckluft aus einer Druckluftquelle P1 wahlweise in zwei Druckluftleitungen A1 und A2 speist. Abweichend von der in der Figur 4 dargestellten Ausführungsform mündet der Kanal 9 mit dem Ventil 10 in Strömungsrichtung hinter dem Einlassventil 16 im Arbeitsmediumeinlass 4. Selbstverständlich könnte auch hier eine andere Mündungsposition vorgesehen sein.

Im Einzelnen umfasst das Druckluftsystem 15 eine Druckluftleitung 17, welche das Einlassventil 16 und das Ventil 10 im Kanal 9 hinsichtlich ihrer Beaufschlagung mit Druckluft in Reihe zueinander anordnet. Zwischen dem Druckluftanschluss (der Leitung A2) für das Ventil 10 und den Druckluftanschluss (der Leitung A1) für das Einlassventil 16 ist in Strömungsrichtung der Druckluft durch die Leitung 17 gesehen ein Absperrventil 18, hier in Form eines 2/2-Wegeventils, angeordnet, welches den Abzweig für das Ventil 16 vom Abzweig für das Ventil 10 wahlweise druckdicht abtrennt. Somit ist es möglich, nur das Ventil 10 mit Druckluft aus dem Druckluftsystem 15 zu beaufschlagen, ohne gleichzeitig das Einlassventil 16 mit Druckluft zu beaufschlagen.

Besonders vorteilhaft ist in Reihe zu dem Absperrventil 18 in der Druckluftleitung 17 ein weiteres Druckluftventil 30, hier in Form eines 3/2-Wegeventils, angeordnet, welches den Versorgungsdruck für das Druckluftsystem 15 aus der Druckluftquelle P1 schaltet. Ferner ist bei dem gezeigten Ausführungsbeispiel in der Druckluftleitung 17 in Reihe hinter dem Absperrventil 18 ein Entlüftungsventil 31 angeordnet, um, bei geschlossenem Ventil 18, die Druckluftleitung A1 zu dem Einlassventil 16 zu entlüften und bei geöffnetem Absperrventil 18 und geschlossenem Druckluftventil 30 die Druckluftleitung A2 zu dem Ventil 10 zu entlüften. Wie gezeigt, kann das Entlüftungsventil 31 wiederum als 2/2-Wegeventil ausgeführt sein.

Alle Druckluftventile 30, 18, 31 können beispielsweise über eine gemeinsame Steuervorrichtung 32, insbesondere elektrisch oder elektromagnetisch, angesteuert werden. Insbesondere ist das Absperrventil 18 im nicht angesteuerten Zustand, beispielsweise im nicht bestromten Zustand, geschlossen, wohingegen das Entlüftungsventil 31 im nicht angesteuerten beziehungsweise nicht bestromten Zustand geöffnet ist. Auch das Druckluftventil 30 kann vorteilhaft im nicht angesteuerten Zustand geschlossen sein.

In der Figur 5 ist schematisch ferner gezeigt, dass in der Absaugpumpe 5, beispielsweise in Form einer Seitenkanalpumpe, ein Schmierkanal 21 vorgesehen ist, über welchen das Lager (nicht dargestellt) der Absaugpumpe 5 mit Arbeitsmedium von der Druckseite der Absaugpumpe 5 aus geschmiert wird. Ein solches Lager ist beispielsweise als Gleitlager ausgeführt und in der Figur 2 mit dem Bezugszeichen 20 beziffert.

Durch kurzes Öffnen des Ventils 10 (Figur 5) bei längeren Leerlaufphasen (Phasen im Nichtbetriebszustand der hydrodynamischen Maschine) kann eine ausreichende Schmierung des Lagers gesichert werden.

## Patentansprüche

1. Hydrodynamische Maschine, insbesondere hydrodynamischer Retarder,
1.1 mit zwei Schaufelrädern (1, 2), die miteinander einen torusförmigen Arbeitsraum (3) ausbilden, von denen wenigstens eines über eine Drehachse der hydrodynamischen Maschine umläuft;
1.2 der Arbeitsraum (3) ist für einen Betriebszustand über wenigstens einen vorgesehenen Arbeitsmediumeinlass (4) mit einem Arbeitsmedium befüllbar, um mittels einer Kreislaufströmung des Arbeitsmediums im Arbeitsraum (3) Drehmoment und/oder Antriebsleistung hydrodynamisch vom ersten auf das zweite Schaufelrad (1, 2) zu übertragen, und für einen Nichtbetriebszustand von dem Arbeitsmedium entleerbar, um eine Drehmoment- und/oder Antriebsleistungsübertragung zu vermeiden;
1.3 es ist eine Absaugpumpe (5) mittels einer strömungsleitenden Saugleitung (6) am Arbeitsraum (3) angeschlossen, um im Nichtbetriebszustand Arbeitsmedium und/oder Luft aus dem Arbeitsraum (3) abzusaugen und zum Abführen in eine Druckleitung (7) einzuspeisen;
1.4 die Absaugpumpe (5) weist ein Laufrad (8) auf, das zusammen mit dem wenigstens einen Schaufelrad (1, 2) mit derselben oder einer abweichenden Drehzahl umläuft;
**dadurch gekennzeichnet, dass**
1.5 die Druckleitung (7) über einen wahlweise verschließbaren Kanal (9) mit dem Arbeitsmediumeinlass (4), dem Arbeitsraum (3) und/oder der Saugleitung (6) strömungsleitend verbunden ist.

2. Hydrodynamische Maschine gemäß Anspruch 1, **dadurch gekennzeichnet, dass** in dem Kanal (9) ein zwischen zwei Stellungen betätigbares Ventil (10), insbesondere 2/2-Wegeventil, angeordnet ist, wobei die erste Stellung den Kanal (9) freigibt und die zweite Stellung den Kanal (9) verschließt, und das Ventil (10) derart vorgespannt ist, dass es bei Betätigung in der zweiten Stellung und bei Nichtbetätigung in der ersten Stellung verbleibt.

3. Hydrodynamische Maschine gemäß einem der Ansprüche 1 oder 2, **dadurch gekennzeichnet, dass** die Absaugpumpe (5) als Seitenkanalpumpe ausgeführt ist, umfassend ein Laufrad (8) mit einer Vielzahl von Schaufeln, und einen Seitenkanal (12), der den Schaufeln, insbesondere in axialer und/oder radialer Richtung der hydrodynamischen Maschine gegenübersteht, in Umfangsrichtung der hydrodynamischen Maschine verläuft und an mindestens einer Stelle eine Unterbrechung aufweist, vor welcher, in Drehrichtung des Laufrads (8) betrachtet, die Druckleitung (7) im Seitenkanal (12) mündet, und hinter welcher die Saugleitung (6) im Seitenkanal (12) mündet, wobei das Laufrad (8) durch eines der beiden Schaufelräder (1, 2) gebildet wird oder drehfest an diesem, insbesondere über eine gemeinsame Welle (13), angeschlossen ist.

4. Hydrodynamische Maschine gemäß einem der Ansprüche 1 bis 3, **dadurch gekennzeichnet, dass** in der Druckleitung (7) ein Rückschlagventil (14) angeordnet ist, über welches die Absaugpumpe (5) Arbeitsmedium und/oder Luft aus dem Arbeitsraum (3) pumpt.

5. Hydrodynamische Maschine gemäß der Ansprüche 2 und 4, **dadurch gekennzeichnet, dass** das Ventil (10) in dem Kanal (9) und das Rückschlagventil (14) baulich miteinander vereint und insbesondere in der hydrodynamischen Maschine, insbesondere von einem Gehäuse (22) der hydrodynamischen Maschine getragen werden.

6. Hydrodynamische Maschine gemäß einem der Ansprüche 2 bis 5, **dadurch gekennzeichnet, dass** das Ventil (10) einen Druckluftanschluss aufweist, über welchen es mittels Druckluft aus einem Druckluftsystem (15) aus der ersten in die zweite Stellung betätigbar ist.

7. Hydrodynamische Maschine gemäß Anspruch 6, **dadurch gekennzeichnet, dass** im Arbeitsmediumeinlass (4) ein Einlassventil (16) zum wahlweisen Verschließen des Arbeitsmediumeinlasses (4) vorgesehen ist, welches ebenfalls einen Druckluftanschluss aufweist, über welchen es mittels Druckluft aus dem Druckluftsystem (15) betätigbar ist, insbesondere aus seiner geschlossenen in seine geöffnete Stellung verbringbar ist.

8. Hydrodynamische Maschine gemäß Anspruch 7, **dadurch gekennzeichnet, dass** das Ventil (10) im Kanal (9) und das Einlassventil (16) hinsichtlich ihrer Druckluftbeaufschlagung in einer Druckluftleitung (17) in Reihe hintereinander angeordnet sind und durch ein Absperrventil (18), insbesondere ein 2/2-Wegeventil, druckluftseitig wahlweise voneinander trennbar sind.

9. Hydrodynamische Maschine gemäß einem der Ansprüche 1 bis 8, **dadurch gekennzeichnet, dass** an die hydrodynamische Maschine ein externer Arbeitsmediumkreislauf (23), insbesondere Fahrzeugkühlkreislauf, angeschlossen ist, wobei das Arbeitsmedium insbesondere Wasser oder ein Wassergemisch ist, und die Druckleitung (7) im externen Arbeitsmediumkreislauf (23) mündet, um Arbeitsmedium in diesen einzuspeisen, insbesondere parallel zu einem am Arbeitsraum (3) angeschlossenen Arbeitsmediumauslass (19).

10. Hydrodynamische Maschine gemäß einem der Ansprüche 1 bis 9, **dadurch gekennzeichnet, dass** das Laufrad (8) der Absaugpumpe (5) mittels wenigstens eines Lagers (20), insbesondere Gleitlagers, drehbar gelagert ist, welches mit Arbeitsmedium geschmiert wird, insbesondere über einen Schmierkanal (21) zwischen der Druckseite, insbesondere der Druckleitung (7), der Absaugpumpe (5) und dem Lager (20).

11. Verfahren zum Betreiben einer hydrodynamischen Maschine gemäß einem der Ansprüche 1 bis 10, insbesondere in einem Fahrzeug oder Kraftfahrzeug, **dadurch gekennzeichnet, dass** der verschließbare Kanal (9) im entleerten Zustand des Arbeitsraumes (3) in Intervallen verschlossen und geöffnet wird, um wechselseitig einen Arbeitsmediumdruck in der Druckleitung (7) auf- und abzubauen.

12. Verfahren gemäß Anspruch 11, **dadurch gekennzeichnet, dass** das Öffnen und Schließen des Kanals (9) durch Öffnen und Schließen des Ventils (10), insbesondere durch Beaufschlagen und Nichtbeaufschlagen mit Druckluft erfolgt.

13. Verfahren gemäß einem der Ansprüche 11 oder 12, **dadurch gekennzeichnet, dass** das Schließen des Kanals (9) für im Vergleich zu den Öffnungszeiten eine vergleichsweise kurze Zeit in regelmäßigen, vorgegebenen Abständen erfolgt.

## Claims

1. A hydrodynamic machine, especially a hydrodynamic retarder,
1.1 comprising two blade wheels (1, 2) which jointly form a toroidal working chamber, of which at least one revolves via a rotational axis of the hydrodynamic machine;
1.2 the working chamber (3) can be filled with a working medium for an operating state via at least one provided working medium inlet (4) in order to transmit torque and/or drive power hydrodynamically from the first to the second blade wheel (1, 2) by means of a cycle flow of the working medium in the working chamber (3), and can be discharged of the working medium for a non-operating state in order to prevent any torque and/or drive power transmission;
1.3 a suction pump (5) is connected by means of a flow-conducting suction line (6) to the working chamber (3) in order to aspirate working medium and/or air from the working chamber (3) in the non-operating state and to supply the same to a pressure line (7) for discharging;
1.4 the suction pump (5) comprises an impeller (8) which revolves together with the at least one blade wheel (1, 2) with the same or a deviating speed; **characterized in that**
1.5 the pressure line (7) is connected in a flow-conducting fashion via a selectively closable channel (9) to the working medium inlet (4), the working chamber (3) and/or the suction line (6).

2. A hydrodynamic machine according to claim 1, **characterized in that** a valve (10), especially a 2/2-port directional control valve, which can be actuated between two positions, is arranged in the channel (9), with the first position releasing the channel (9) and the second position sealing the channel (9), and the valve (10) is pretensioned in such a way that it remains in the second position upon actuation and remains in the first position upon non-actuation.

3. A hydrodynamic machine according to one of the claims 1 or 2, **characterized in that** the suction pump (5) is arranged as a side-channel pump, comprising an impeller (8) with a plurality of blades, and a side channel (12) which is opposite of the blades, especially in the axial and/or radial direction of the hydrodynamic machine, extends in the circumferential direction of the hydrodynamic machine and comprises an interruption at least at one point, before which the pressure line (7) opens into the side channel (12) as seen in the rotational direction of the impeller (8), and behind which the suction line (6) opens into the side channel (12), with the impeller (8) being formed by one of the two blade wheels (1, 2), or being connected to said blade wheels in a torsionally rigid fashion, especially via a common shaft (13).

4. A hydrodynamic machine according to one of the claims 1 to 3, **characterized in that** a non-return valve (14) is arranged in the pressure line (7), via which the suction pump (5) pumps working medium and/or air from the working chamber (3).

5. A hydrodynamic machine according to the claims 2 and 4, **characterized in that** the valve (10) in the channel (9) and the non-return valve (14) are structurally joined with one another and are carried especially in the hydrodynamic machine, especially by a housing (22) of the hydrodynamic machine.

6. A hydrodynamic machine according to one of the claims 2 to 5, **characterized in that** the valve (10) comprises a compressed-air connection, via which it can be actuated from the first to the second position by means of compressed air from a compressed-air system (15).

7. A hydrodynamic machine according to claim 6, **characterized in that** an inlet valve (16) is provided in the working medium inlet (4) for the selective closing of the working medium inlet (4), which also comprises a compressed-air connection via which it can be actuated by means of compressed air from the compressed-air system (15), especially displaceable from its closed to its opened position.

8. A hydrodynamic machine according to claim 7, **characterized in that** the valve (10) in the channel (9) and the inlet valve (16) are arranged with respect to their pressurization in series behind one another in a compressed-air line (17) and can selectively be separated from one another on the compressed-air side by a shut-off valve (18), especially a 2/2-port directional control valve.

9. A hydrodynamic machine according to one of the claims 1 to 8, **characterized in that** an external working medium cycle (23), especially a vehicle cooling cycle, is connected to the hydrodynamic machine, with the working medium especially being water or a water mixture, and the pressure line (7) opens into the external working medium cycle (23) in order to feed working medium into said cycle, especially parallel to a working medium outlet (19) connected with the working chamber (3).

10. A hydrodynamic machine according to one of the claims 1 to 9, **characterized in that** the impeller (8) of the suction pump (5) is rotatably held by means of at least one bearing (20), especially a sliding bearing, which is lubricated with working medium, especially via a lubricating channel (21) between the pressure side, especially the pressure line (7), the suction pump (5) and the bearing (20).

11. A method for operating a hydrodynamic machine according to one of the claims 1 to 10, especially in a vehicle or motor vehicle, **characterized in that** the closable channel (9) is closed and opened in the discharged state of the working chamber (3) in intervals in order to build up and reduce in an alternating fashion a working medium pressure in the pressure line (7).

12. A method according to claim 11, **characterized in that** the opening and closing of the channel (9) occurs by opening and closing the valve (10), especially by supplying and not supplying compressed air.

13. A method according to one of the claims 11 or 12, **characterized in that** the closing of the channel (9) occurs in comparison with the opening times over a comparatively short period of time in regular, predetermined intervals.

## Revendications

1. Machine hydrodynamique, en particulier retardateur hydrodynamique,
1.1 avec deux roues à aubes (1, 2) formant ensemble un espace de travail toroïdal (3), dont l'une au moins tourne sur un axe de rotation de la machine hydrodynamique ;
1.2 l'espace de travail (3) peut être rempli pour établir un état de fonctionnement avec un fluide de travail via au moins une entrée de fluide de travail (4) prévue, afin de transmettre de façon hydraulique, au moyen d'une circulation en circuit du fluide de travail dans l'espace de travail (3), un couple de rotation et/ou une puissance d'entraînement de la première roue à aubes à la deuxième (1, 2), et peut être vidé du fluide de travail pour établir un état de non-fonctionnement, afin d'éviter une transmission du couple de rotation et/ou de la puissance d'entraînement ;
1.3 une pompe d'aspiration (5) est raccordée au moyen d'une conduite d'aspiration (6) acheminant le flux à l'espace de travail (3) afin d'aspirer du fluide de travail et/ou de l'air hors de l'espace de travail (3) dans l'état de non-fonctionnement et de l'amener dans une conduite de refoulement (7) pour l'évacuer ;
1.4 la pompe d'aspiration (5) présente une roue (8) qui tourne avec l'au moins une roue à aubes (1, 2) à la même vitesse de rotation ou à une vitesse de rotation différente ;
**caractérisée en ce que**
1.5 la conduite de refoulement (7) est reliée de façon à acheminer le flux par à l'entrée de fluide de travail (4), à l'espace de travail (3) et/ou à la conduite d'aspiration (6) l'intermédiaire d'un canal (9) pouvant être fermé sélectivement.

2. Machine hydrodynamique selon la revendication 1, **caractérisée en ce qu'**il est prévu dans le canal (9) une vanne (10) pouvant être actionnée dans deux positions, en particulier une vanne à 2/2 voies, la première position dégageant le canal (9) et la deuxième position fermant le canal (9), et la vanne (10) est précontrainte de telle façon qu'elle reste dans la deuxième position quand elle est actionnée et dans la première position quand elle n'est pas actionnée.

3. Machine hydrodynamique selon l'une des revendications 1 ou 2, **caractérisée en ce que** la pompe d'aspiration (5) est conçue comme une pompe à canal latéral comprenant une roue (8) avec une pluralité d'aubes et un canal latéral (12) qui dépasse des pales, en particulier dans le sens axial et/ou radial de la machine hydrodynamique, est orienté dans le sens de la circonférence de la machine hydrodynamique et présente à au moins un endroit une interruption devant laquelle, dans le sens de rotation de la roue (8), la conduite de refoulement (7) débouche dans le canal latéral (12), et derrière laquelle la conduite d'aspiration (6) débouche dans le canal latéral (12), la roue (8) étant formée par l'une des deux roues à aubes (1, 2) ou raccordée de manière solidaire en rotation à celle-ci, en particulier par un arbre commun (13).

4. Machine hydrodynamique selon l'une des revendications 1 à 3, **caractérisée en ce qu'**il est prévu dans la conduite de refoulement (7) un clapet antiretour (14) via lequel la pompe d'aspiration (5) pompe du fluide de travail et/ou de l'air hors de l'espace de travail (3).

5. Machine hydrodynamique selon les revendications 2 et 4, **caractérisée en ce que** la vanne (10) dans le canal (9) et le clapet antiretour (14) sont réunis entre eux par la construction et sont en particulier supportés dans la machine hydrodynamique, en particulier par un logement (22) de la machine hydrodynamique.

6. Machine hydrodynamique selon l'une des revendications 2 à 5, **caractérisée en ce que** la vanne (10) présente un raccord d'air comprimé par lequel elle peut être actionnée au moyen d'air comprimé à partir du système pneumatique (15) pour passer de la première position à la deuxième.

7. Machine hydrodynamique selon la revendication 6, **caractérisée en ce qu'**il est prévu dans l'entrée de fluide de travail (4) une vanne d'admission (16) pour fermer sélectivement l'entrée de fluide de travail (4), qui présente également un raccord d'air comprimé par lequel elle peut être actionnée au moyen d'air comprimé à partir du système pneumatique (15), en particulier amenée de sa position fermée à sa position ouverte.

8. Machine hydrodynamique selon la revendication 7, **caractérisée en ce que** la vanne (10) dans le canal (9) et la vanne d'admission (16) sont disposées en série l'une derrière l'autre dans une conduite pneumatique (17) en ce qui concerne leur exposition à l'air comprimé et peuvent être séparées sélectivement l'une de l'autre par une vanne d'arrêt (18), en particulier une vanne à 2/2 voies, du côté de l'air comprimé.

9. Machine hydrodynamique selon l'une des revendications 1 à 8, **caractérisée en ce qu'**un circuit de fluide de travail externe (23), en particulier un circuit de refroidissement de véhicule, est raccordé à la machine hydrodynamique, le fluide de travail étant en particulier de l'eau ou un mélange contenant de l'eau, et la conduite de refoulement (7) débouche dans le circuit de fluide de travail externe (23) pour amener du fluide de travail dans celui-ci, en particulier parallèlement à une sortie de fluide de travail (19) raccordée à l'espace de travail (3).

10. Machine hydrodynamique selon l'une des revendications 1 à 9, **caractérisée en ce que** la roue (8) de la pompe d'aspiration (5) est supportée avec possibilité de rotation au moyen d'un palier (20), en particulier d'un palier lisse, qui est lubrifié avec du fluide de travail, en particulier via un canal de lubrification (21) entre le côté de refoulement, en particulier la conduite de refoulement (7), la pompe d'aspiration (5) et le palier (20).

11. Procédé pour faire fonctionner une machine hydrodynamique selon l'une des revendications 1 à 10, en particulier dans un véhicule ou un véhicule à moteur, **caractérisé en ce que** le canal (9) pouvant être fermé est fermé et ouvert par intermittence quand l'espace de travail (3) est vidé, afin de constituer et de réduire alternativement une pression de fluide de travail dans la conduite de refoulement (7).

12. Procédé selon la revendication 11, **caractérisé en ce que** l'ouverture et la fermeture du canal (9) s'effectuent par ouverture et fermeture de la vanne (10), en particulier par l'application et la non-application d'air comprimé sur celle-ci.

13. Procédé selon l'une des revendications 11 ou 12, **caractérisé en ce que** la fermeture du canal (9) s'effectue pendant un temps relativement court par rapport aux temps d'ouverture, à intervalles réguliers et prédéterminés.
